# FASCICULE DE BREVET EUROPEEN

(11) **EP 2 762 281 B1**
(45) Date de publication et mention de la délivrance du brevet: **06.04.2016**
(21) Numéro de dépôt: 14153505.4
(22) Date de dépôt: 31.01.2014
(51) Int. Cl.: B25J 19/06, B25J 9/16, B65G 61/00

(54) **Procédé anti intrusion dans une installation robotisée**
Verfahren gegen unbefugtes Eindringen in eine robotisierte Anlage
Method for preventing intrusion in a robotised facility

(30) Priorité: 05.02.2013 FR 1350966
(43) Date de publication de la demande: 06.08.2014
(73) Titulaire: C.E.R.M.E.X. CONSTRUCTIONS ETUDES ET RECHERCHES DE MATERIELS POUR L'EMBALLAGE D'EXPEDITION, 21910 Corcelles-les-Cîteaux (FR)
(72) Inventeur: Sauvageot, Fabrice, 76930 Octeville-sur-Mer (FR)
(74) Mandataire: Eltzer, Thomas

(56) Documents cités:
- EP-A1- 2 186 761
- EP-A2- 1 331 433
- US-A1- 2007 211 395

## Description

L'invention concerne un procédé anti-intrusion dans une installation robotisée automatique, dans laquelle un robot est mis en oeuvre, tel que défini dans le préambule de la revendication 1.

Un tel procédé et une telle installation sont décrits notamment dans les demandes de brevet FR 2 948 339 et EP-A-2186 761. L'installation comprend usuellement, pour des questions de sécurité, une enceinte fermée dans laquelle le robot évolue, et empile des produits sur au moins une palette positionnée à un poste de palettisation.

Une porte située devant le poste de palettisation permet à un opérateur de récupérer la palette quand cette dernière est pleine.

Usuellement toujours, la porte peut être équipée d'une rampe de capteurs, formant une barrière immatérielle qui permet de mettre l'installation en sécurité, c'est-à-dire au moins d'arrêter le fonctionnement du robot dans l'enceinte (voire de couper complètement l'alimentation de l'installation en électricité), si la barrière immatérielle est coupée en particulier par l'opérateur ou une autre personne qui pénètre dans l'enceinte par la porte. Les capteurs peuvent être des cellules photoélectriques disposées dans l'enceinte, à distance de la porte, derrière le cadre de cette dernière.

Une telle installation n'assure pas une sécurité optimale pour l'opérateur.

En effet, il est à noter que la hauteur de la barrière immatérielle est prédéterminée, notamment en fonction de la distance à laquelle intervient le robot près de la porte de l'enceinte, et en fonction de la hauteur d'une palette pleine, sur laquelle se trouve un certain nombre de couches de produits rangés. Si, en fin de production, il n'y a pas assez de produits pour remplir une palette, une palette non pleine doit être sortie. Il existe alors une différence de hauteur entre la partie supérieure de la palette sur laquelle sont rangés les produits et la hauteur normale de palette pleine. Un opérateur peut alors s'introduire sur la palette non pleine sans être détecté et sans que l'enceinte ne soit mise en sécurité.

Le même problème se pose si des produits tombent de la palette après l'ouverture de la porte de l'enceinte.

L'invention permet de pallier à cet inconvénient. Elle présente un intérêt certain dans le cas où une situation dangereuse serait détectée lors du retrait d'une palette pleine.

Elle s'applique à toutes sortes d'enceintes, même si elle présente un intérêt plus particulier pour les enceintes dans lesquelles les robots sont autorisés à travailler, même si l'opérateur entre dans l'enceinte.

A cet effet, l'invention concerne un procédé de mise en oeuvre d'une installation robotisée, comprenant :
- une enceinte fermée munie d'au moins une porte offrant l'accès à au moins un poste d'intervention opérateur, ledit au moins un poste d'intervention opérateur étant situé dans une zone de travail dudit robot, et étant apte à accueillir une palette,
- une série de moyens de détection de présence qui sont alignés sur une hauteur de l'enceinte, ladite série de moyens de présence étant disposée au voisinage de ladite porte, ladite série de moyens de détection étant reliée à un automate de sécurité agissant sur le fonctionnement du robot et /ou sur la mise en sécurité de ladite enceinte, et communiquant avec un automate de gestion de l'installation robotisée, l'automate de gestion autorisant l'extraction d'une palette et communique à l'automate de sécurité une information concernant l'autorisation d'extraction.

Conformément à l'invention, le procédé est remarquable en ce qu'il comporte les étapes suivantes, dans cet ordre :
- ladite série de moyens de détection transmet audit automate de sécurité une information initiale de la palette sur laquelle des produits sont rangés,
- ledit automate de sécurité génère une information de référence qui est fonction de ladite information initiale reçue,
- au moins au moment où la palette est extraite du poste d'intervention opérateur et où une extrémité de la palette se trouve devant la série de moyens de détection :
   o les moyens de détection transmettent audit automate de sécurité une information ponctuelle de hauteur de ladite palette, et
   ∘ ledit automate de sécurité compare ladite information ponctuelle de hauteur à ladite information de référence,
- et en ce que, si ladite information ponctuelle de hauteur ne correspond pas à l'information de référence, alors le robot est arrêté dans son fonctionnement et/ ou ladite enceinte est mise en sécurité.

Ainsi, si un opérateur tente de passer sur les produits rangés sur la palette, cette intrusion dangereuse sera détectée car l'information ponctuelle de hauteur prendra en considération l'encombrement de l'opérateur passant sur les produits de la palette, et cette information ponctuelle de hauteur sera différente de l'information de référence basée sur l'information initiale.

Il devra être compris que l'information de référence, qui est générée par l'automate de sécurité à partir de l'information initiale, ne correspond pas forcément à ladite information initiale. L'information de référence doit être comprise comme une information qui est générée à partir de critères dont l'un est l'information initiale. L'information de référence peut donc être une fourchette de valeurs ou une valeur à laquelle a été appliqué un algorithme.

C'est ainsi que, suivant un mode particulier de mise en oeuvre, l'automate de sécurité peut attribuer une même information de référence à deux informations initiales de hauteur transmises par deux capteurs voisins, appartenant à un même ensemble de capteurs.

Suivant l'invention, selon un mode de réalisation qui sera décrit et illustré par la suite, au moment de l'extraction de la palette les moyens de détection peuvent transmettre périodiquement ladite information ponctuelle, et l'automate peut comparer chaque information ponctuelle périodique reçue à ladite information de référence.

Suivant encore un autre mode de réalisation avantageux, avant un cycle de palettisation, on réalise un test du fonctionnement de ladite série de moyens de détection. De cette façon, on s'assure du bon fonctionnement des moyens de détection avant chaque extraction de palette. Si un dysfonctionnement des moyens de détection est repéré, alors l'installation pourrait être mise en sécurité avant de permettre la sortie de la palette pleine.

Le test peut consister à :
- contrôler que les moyens de détection ne sont pas occultés, et à
- occulter chacun desdits moyens de détection, par un passage dudit robot devant chacun d'entre eux pendant un laps de temps prédéterminé et constater un changement d'état de chacun desdits moyens de détection au passage dudit robot.

L'invention concerne par ailleurs une installation pour la mise en oeuvre du procédé tel que défini ci-dessus, ladite installation comprenant :
- une enceinte fermée munie d'au moins une porte offrant l'accès à au moins un poste d'intervention opérateur, ledit au moins un poste d'intervention opérateur étant situé dans ladite zone de travail dudit robot, et étant apte à accueillir une palette,
- une série de moyens de détection de présence qui sont alignés sur un montant de l'enceinte, ladite série de moyens de détection (i) étant disposée au voisinage de ladite porte, (ii) étant reliée à un automate de sécurité agissant sur le fonctionnement du robot et /ou sur la mise en sécurité de ladite enceinte, et communiquant avec un automate de gestion de palettisation, et (iii) comportant une série de capteurs occultables positionnés à intervalles réguliers sur au moins une partie de la hauteur dudit poste d'intervention opérateur les intervalles réguliers étant au plus de 400 mm.

De préférence, on peut prévoir que ladite série de capteurs comporte huit capteurs (XX), répartis en quatre ensembles de deux capteurs, lesdits ensembles étant espacés régulièrement les uns des autres sensiblement de 400 mm, les deux capteurs d'un même ensemble étant espacés d'une distance comprise entre 50 mm et 200 mm.

Un tel mode de réalisation permet de prendre en considération la levée d'une palette au moyen d'un transpalette sans pour autant que l'installation ne soit mise en sécurité.

Pour pouvoir être exécutée, l'invention est exposée de façon suffisamment claire et complète dans la description suivante qui est, en plus, accompagnée de dessins dans lesquels :
- La figure 1 est une représentation schématique, en vue de face, d'un poste d'intervention opérateur dans lequel se trouve une palette pleine, ledit poste étant équipé de moyens de surveillance conformes à un mode de réalisation de l'invention ;
- La figure 2 montre le poste d'intervention de la figure 1, dans lequel un opérateur tente de grimper sur la palette pleine ;
- La figure 3 montre le poste d'intervention de la figure 1, dans lequel les produits qui étaient positionnés sur la palette sont tombés après ouverture d'une porte du poste d'intervention ;
- Les figures 4a et 4b montrent le poste d'intervention de la figure 1, comportant une palette pleine présentant une certaine hauteur, avant la saisie de la palette par un transpalette (figure 4a) et après la saisie de la palette par le transpalette (figure 4b) ;
- Les figures 5a et 5b montrent le poste d'intervention de la figure 1, comportant une palette pleine présentant une seconde hauteur, avant la saisie de la palette par un transpalette (figure 5a) et après la saisie de la palette par le transpalette (figure 5b) ;
- Les figures 6a et 6b montrent le poste d'intervention de la figure 1, comportant une palette pleine présentant une troisième hauteur, avant la saisie de la palette par un transpalette (figure 6a) et après la saisie de la palette par le transpalette (figure 6b);
- Les figures 7a et 7b montrent le poste d'intervention de la figure 1, comportant une palette pleine présentant une quatrième hauteur, avant la saisie de la palette par un transpalette (figure 7a) et après la saisie de la palette par le transpalette (figure 7b) ;
- Et les figures 8a et 8b montrent le poste d'intervention de la figure 1, comportant une palette pleine présentant une certaine hauteur, avant la saisie de la palette par un transpalette (figure 8a) et après la saisie de la palette par le transpalette (figure 8b).

Dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention.

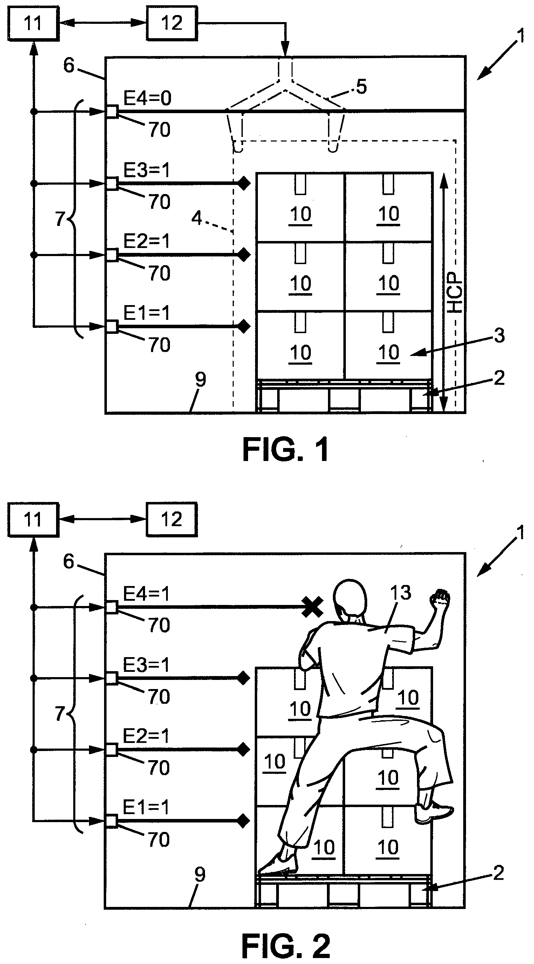

Sur la figure 1, comme sur toutes les autres figures, on a représenté de façon très schématique une enceinte 1 par un carré. Il faut s'imaginer que l'enceinte est un espace fermé, tel que par exemple celui décrit dans la demande de brevet FR 2 948 339, qui comporte un poste de palettisation, un robot 5 qui saisit des produits 10 sur un tapis d'amenée dont l'extrémité arrive dans l'enceinte et qui les dépose sur une palette 2 qui se trouve dans le poste de palettisation.

Le poste de palettisation comprend partiellement un poste 3 d'intervention opérateur, c'est-à-dire une zone géographique dans laquelle un opérateur peut intervenir pour notamment extraire une palette 2 pleine, c'est-à-dire une palette sur laquelle se trouvent des produits, rangés sur un nombre prédéterminé de couches. La zone 3 d'intervention opérateur, se trouvant au moins partiellement dans la zone de palettisation (qui est une zone dans laquelle le robot 5 travaille, se trouve donc également située dans une zone de travail du robot 5).

L'enceinte 1 peut également comporter une porte, qui peut être une porte matérielle ou immatérielle, et qui donne l'accès au poste d'intervention opérateur.

Pour simplifier la lecture des figures, une porte 4 a été représentée schématiquement uniquement sur la figure 1 par des traits pointillés, ainsi que le robot 5 par une pince en traits discontinus.

L'enceinte 1 comporte, sur un montant 6 vertical, une série de moyens 7 de détection de présence. Les moyens 7 de détection de présence sont des capteurs 70 optiques du type classique, qui passent d'un état de détection (En = 1) à un état de non détection (En=0) suivant qu'ils sont respectivement occultés ou non occultés.

« En » devra être compris comme correspondant à l'Etat de détection du n^{ème} capteur 70 de la série de moyens 7 de détection de présence.

Par exemple, pour le premier capteur 70, son état de détection sera noté E1 sur les figures. Si E1 = 1, alors cela signifie que le premier capteur est occulté. En d'autres termes, le capteur a détecté un produit 3 ou autre chose.

Sur les figures 1 à 4b, la série de moyens 7 de détection comporte quatre capteurs 70 optiques qui sont répartis à égale distance les uns des autres. Ladite distance est au maximum de 400 mm.

Plus précisément, les capteurs 70 sont installés verticalement tous les 400 mm en partant du sol 9 jusqu'à une hauteur de 1600 mm.

L'invention n'est toutefois pas limitée à l'utilisation de ces seuls capteurs 70 optiques, les moyens 7 de détection de présence pouvant comprendre d'autres sortes de capteurs tels que des capteurs à ultrasons, des capteurs à infrarouge...

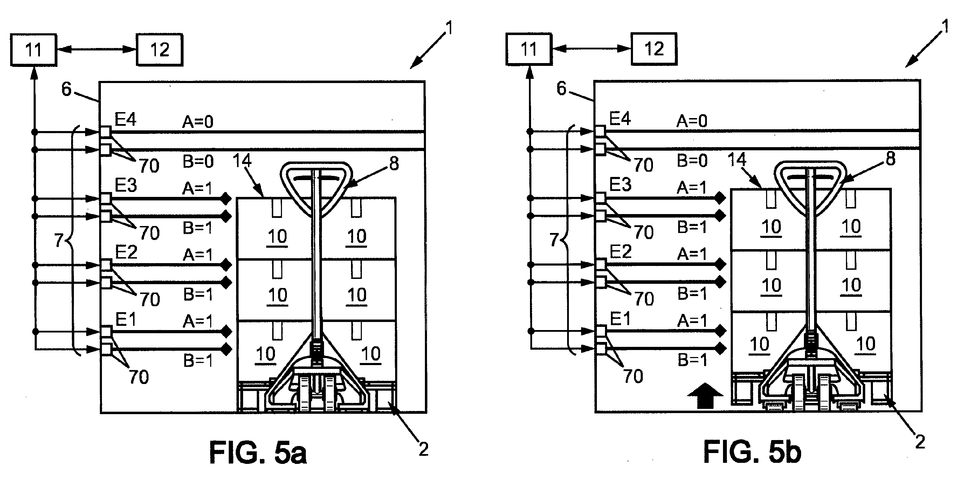

De plus, l'invention n'est également pas limitée à la présence de seulement quatre capteurs : sur les figures 5a à 8b, l'installation comporte huit capteurs 70 optiques, répartis uniformément par groupes de deux le long du montant 6.

Dans le cas de ce mode de réalisation, « En » correspond à l'Etat d'un n^{eme} groupe de deux capteurs 70. Chaque capteur 70 supérieur d'un groupe de capteurs 70 a un état noté A, tandis que le capteur 70 inférieur de chaque groupe de capteurs 70 a un état noté B.

Ainsi, si l'on voit noté sur la figure E4, A=0 et B=0, cela signifie que dans le quatrième groupe de capteurs 70, les deux capteurs supérieur et inférieur sont tous les deux non occultés.

Les groupes de deux capteurs 70 sont espacés de 400 mm les uns des autres, et dans un même groupe de deux capteurs 70 optiques, les deux capteurs 70 optiques sont espacés d'une distance comprise entre 50 et 200 mm. Dans le cadre de ce mode de réalisation, l'espace est de 50 mm, ce qui correspond sensiblement à la hauteur de laquelle la palette 2 est soulevée par un transpalette 8 pour pouvoir être sortie.

Comme on peut le voir sur les figures, la série de moyens 7 de détection de présence est positionnée au voisinage de la porte 4 de l'enceinte 1, dans la zone 3 d'intervention opérateur.

Le principe de l'invention consiste à effectuer une mesure de la hauteur de la charge palettisée (c'est-à-dire l'ensemble constitué par les produits 10 rangés en couches sur la palette 2) à l'aide des capteurs 70 optiques.

Que ce soit dans le cadre du premier exemple représenté sur les figures 1 à 4b, ou que ce soit dans le cadre du second exemple représenté sur les figures 5a à 8b, la série de moyens 7 de détection de présence est reliée à un automate 11 de sécurité.

L'automate 11 de sécurité communique avec un automate 12 de gestion de l'installation robotisée, l'automate 12 de gestion et l'automate 11 de sécurité agissant indirectement ou directement sur le fonctionnement du robot et/ ou sur la mise en sécurité de ladite enceinte, c'est-à-dire l'arrêt total de l'alimentation de l'enceinte, ce qui conduit à un arrêt d'urgence du robot dans son fonctionnement.

On va maintenant s'intéresser au mode de fonctionnement de l'invention en faisant référence à chacune des figures montrant des situations différentes.

Sur la figure 1, on a noté une hauteur HCP qui correspond à la Hauteur de la Charge additionnée de celle de la Palette.

Suivant une première étape, l'automate 12 de gestion de l'installation robotisée autorise l'extraction d'une palette et communique à l'automate 11 de sécurité une information qui le renseigne sur le fait qu'il a autorisé l'extraction de la palette.

Suivant cette étape, concrètement, on demande l'ouverture de la porte 4, on mémorise l'état des quatre capteurs 70. Dans le cadre de l'exemple illustré en figure 1, on obtient une information C₀ initiale de la palette qui correspond au 4-uplet C₀ = (1, 1, 1, 0) et qui est transmise à l'automate 11 de sécurité.

A la réception de cette information C₀ initiale, l'automate 11 de sécurité attribue une information de référence, qui correspond à un résultat obtenu après application de critères appliqués à l'information C₀ initiale reçue.

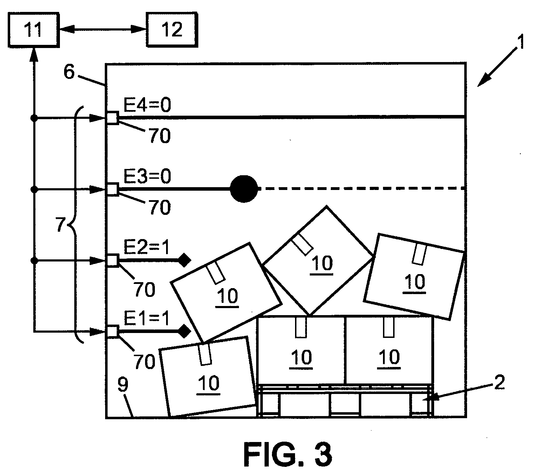

On surveille ensuite la conservation de cette configuration pendant l'évacuation de la palette 2. Ainsi, on prévient de deux défauts montrés en figures 2 et 3 : Dans l'exemple montré en figure 2, où un opérateur 13 tente de monter sur la charge de produits 10 de la palette 2, on passe du 4-uplet C₀ = (1, 1, 1, 0) au 4-uplet C₁ = (1,1,1, 1).

Le 4-uplet C₁ = (1, 1, 1, 1) correspond à une information C₁ ponctuelle.

L'automate 11 de sécurité compare l'information C₁ ponctuelle qu'il reçoit à l'information de référence qu'il a retenue et qui est fonction de l'information C₀ reçue initialement (éventuellement après application de critères à l'information C₁ ponctuelle).

Après comparaison, comme les deux informations ne correspondent pas, une information de défaut est générée par l'automate 11 de sécurité qui arrête le robot dans son fonctionnement et met l'installation en sécurité.

Dans le cas illustré sur la figure 3, le passage du 4-uplet C₀ = (1, 1, 1, 0) au 4-uplet C₁ = (1, 1, 0, 0) génère également l'information de défaut qui conduit à l'arrêt du robot et / ou à la mise en sécurité de l'installation ou de l'enceinte.

Dans ces deux cas simplifiés, tout changement de configuration génère une information de défaut si la palette est présente puis seule(s) un (des) occultation(s) supplémentaire(s), synonyme(s) d'intrusion, génère(nt) une information de défaut si la palette n'est plus présente. Ainsi, la sortie de la palette du champ de la barrière (série de moyens 7 de détection de présence) ne déclenche pas d'informations de défauts intempestives.

Le second mode de réalisation illustré sur les figures 5a à 8b montre un intérêt certain au regard du premier mode de réalisation qui, bien que fonctionnant, peut déclencher un arrêt intempestif car il peut arriver que la levée de la palette 2 par le transpalette 8 suffise à occulter un capteur.

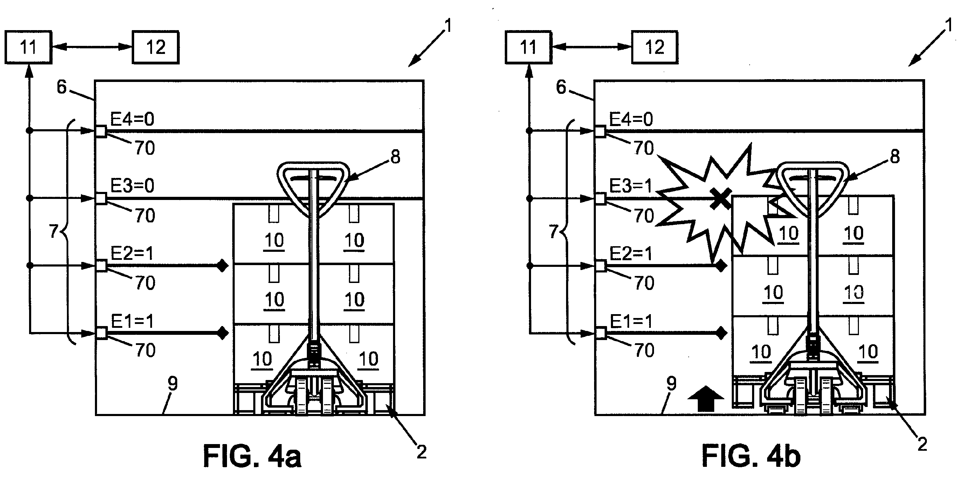

Ainsi, les figures 4a et 4b montrent que l'on passe du 4 uplet C₀ **=** (1, 1, 0, 0) au 4-uplet C₁ = (1, 1, 1, 0), ce qui conduit à la génération d'une information de défaut et à l'arrêt du robot.

C'est ainsi pour améliorer encore le procédé conforme à l'invention que quatre groupes de deux capteurs 70 peuvent remplacer les quatre capteurs 70 montrés sur les figures 1 à 4b.

Il est ainsi possible de distinguer le cas d'une réelle intrusion du cas extrême où la levée du transpalette 8 active le capteur 70 de trop.

Dans l'exemple illustré sur les figures 5a et 5b, avant la levée de la palette 2, la surface 14 supérieure des produits 10 se trouve à un niveau sensiblement identique à celui du capteur supérieur du troisième groupe. Ainsi, avant la levée de la palette 2 par le transpalette 8 (figure 5a), les deux capteurs A et B du troisième groupe présentent le même état occulté (A=1 et B=1 pour E3). Après la levée de la palette 2 par le transpalette 8 (figure 5b), les capteurs A et B du troisième groupe présentent toujours le même état occulté (A=1 et B=1 pour E3) car la surface 14 se trouve toujours au dessus du capteur 70 supérieur du troisième groupe. Il n'y a donc pas d'arrêt intempestif de l'installation robotisée.

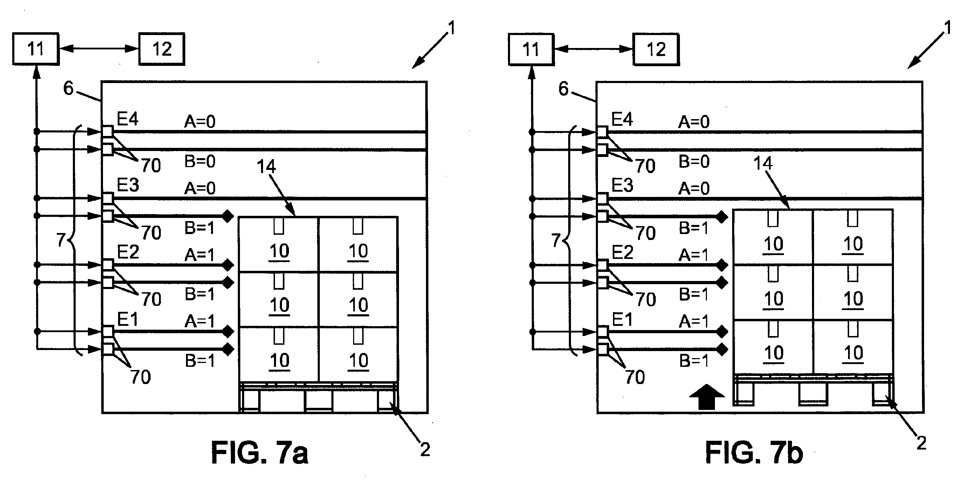

Il en va de même pour l'exemple illustré sur les figures 7a et 7b : Sur la figure 7a, on note que la surface 14 supérieure des produits 10 se trouvant sur la palette 2 se trouve sensiblement au même niveau que celui du capteur 70 inférieur du troisième groupe de capteurs 70 - ainsi, avant la levée de la palette 2, le capteur 70 inférieur du troisième groupe de capteurs est déjà occulté avant la levée (pour le groupe E3, A=0, B=1). Après la levée de la palette 2, la surface supérieure 14 se trouve encore à un niveau situé entre le capteur 70 inférieur et le capteur 70 supérieur du troisième groupe de capteurs 70. Ainsi, le capteur 70 inférieur du troisième groupe reste occulté alors que le capteur 70 supérieur ne l'est toujours pas (pour le troisième groupe de capteurs 70, E3 A=0 et B=1) (figure 7b).

Les deux exemples illustrés sur les figures 5a, 5b, 7a et 7b ne correspondent toutefois pas toujours aux situations rencontrées.

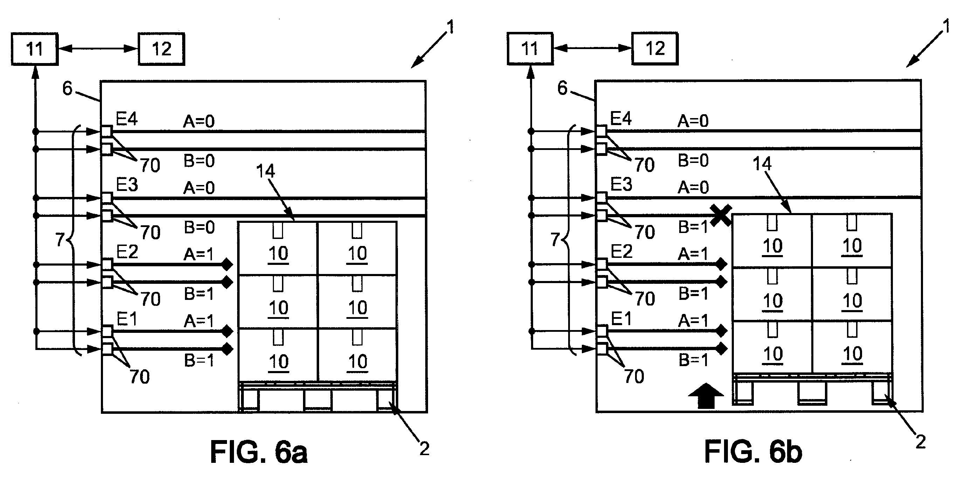

Par exemple, dans l'exemple illustré sur les figures 6a et 6b, les états des deux capteurs 70 avant et après la levée de la palette 2 par le transpalette 8 ne sont pas les mêmes.

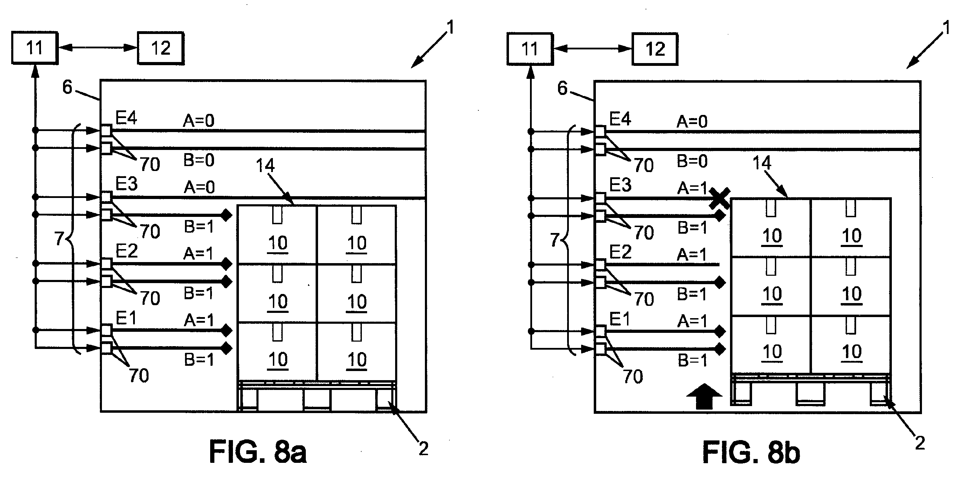

Dans l'exemple illustré en figure 6, la surface 14 supérieure des produits 10 se trouve juste en dessous du niveau du capteur 70 inférieur du troisième groupe. Avant la levée (figure 6a), les capteurs A et B du troisième groupe ne sont donc pas occultés (pour E3, A=0 et B=0), mais après la levée (figure 6b), le capteur B est occulté (pour E3, A=0 et B=1) car la surface 14 supérieure des produits 10 se trouve à un niveau compris entre les niveaux des deux capteurs 70 du troisième groupe (figure 8b).

Il en va de même pour les exemples illustrés sur les figures 8a et 8b : la surface 14 supérieure des produits 10 se trouve, avant la levée de la palette 2, à un niveau compris entre les niveaux des capteurs 70 du troisième groupe, mais proche du niveau du capteur 70 supérieur. Ainsi, avant la levée de la palette 2 (figure 8a), le capteur inférieur du troisième groupe est occulté mais le capteur supérieur du troisième groupe ne l'est pas (pour E3, A=0 et B=1). Mais après levée de la palette 2, la surface 14 passe à un niveau supérieur à celui du capteur 70 supérieur du troisième groupe : l'état de ce capteur change donc (voir figure 8b, E3 ; A=1 et B=1).

Afin que l'installation ne soit pas arrêtée de manière intempestive dans ces cas là, l'information de référence qui est attribuée par l'automate 11 de sécurité à une hauteur HCP qui serait légèrement inférieure à celle de la position du capteur inférieur ou supérieur d'un groupe de capteurs 70 est la même que celle donnée quand la hauteur HCP atteint un niveau supérieur : cela revient à inhiber le défaut d'intrusion dû au capteur 70 juste supérieur (d'un même groupe) à celui ayant détecté la hauteur HCP.

Ainsi, l'information de référence générée par l'automate de sécurité dans le cadre de l'exemple illustré sur la figure 6a est la même que celle qui aurait été attribuée à l'exemple de la figure 6b. Il en va de même pour l'exemple illustré sur les figures 8a et 8b.

Pour s'assurer du bon fonctionnement de l'invention, on prévoit que, avant chaque sortie de palette, on vérifie l'état de fonctionnement de chaque capteur 70 de la série de moyens 7 de détection de présence.

Autrement dit, on réalise un test de fonctionnement de la série de moyens de détection avant d'autoriser l'ouverture de la porte 4 de l'enceinte 1.

Pour ce faire, on utilise le robot 5 pour vérifier que chaque capteur 70 passe d'un état à un autre au passage du robot devant lui.

Concrètement, on vérifie en premier lieu que chaque capteur n'est pas dans un état occulté (tous les capteurs doivent être à l'état « 0 »).

Puis, on occulte chaque capteur 70 en positionnant une partie du robot devant lui, et on constate à chaque passage de la partie du robot devant le capteur que celui-ci change d'état et passe de l'état « 0 » à « 1 ».

Si aucun changement d'état n'est constaté, alors le capteur est défectueux et l'enceinte est mise en sécurité automatiquement par l'automate 11 de sécurité et une information de défaut est transmise à l'automate 12 de gestion de ligne.

Le procédé conforme à l'invention sera remis en oeuvre automatiquement dès que le test de fonctionnement de chaque capteur sera bon, avant une prochaine extraction de palette après remplacement du capteur.

On comprend de ce qui précède comment l'invention permet d'assurer une sécurité supplémentaire aux opérateurs en sortie de palette.

Il devra toutefois être compris que l'invention n'est pas limitée aux exemples spécifiquement décrits ci-avant et qu'elle s'applique à la mise en oeuvre de tout moyen équivalent.

## Revendications

1. Procédé de mise en oeuvre d'une installation robotisée, comprenant :
- une enceinte (1) fermée munie d'au moins une porte (4) offrant l'accès à au moins un poste (3) d'intervention opérateur, ledit au moins un poste (3) d'intervention opérateur étant situé dans une zone de travail d'un robot (5), et étant apte à accueillir une palette (2),
- une série de moyens (7) de détection de présence qui sont alignés sur une hauteur de l'enceinte (1), ladite série de moyens (7) de présence étant disposée au voisinage de ladite porte (4), ladite série de moyens (7) de détection de présence étant reliée à un automate (11) de sécurité agissant sur le fonctionnement du robot (5) et /ou sur la mise en sécurité de ladite enceinte (1), et communiquant avec un automate (12) de gestion de l'installation robotisée, ledit automate (12) de gestion autorisant l'extraction d'une palette (2) et communique à l'automate (11) de sécurité une information concernant l'autorisation d'extraction,
ledit procédé étant **caractérisé en ce que**:
- ladite série de moyens (7) de détection de présence transmet audit automate (11) de sécurité une information initiale de hauteur (HCP) de palette (2) sur laquelle des produits (10) sont rangés,
- ledit automate (11) de sécurité génère une information de référence qui est fonction de ladite information initiale reçue,
- au moins au moment où la palette (2) est extraite du poste (3) d'intervention opérateur et où une extrémité de la palette (2) se trouve devant la série de moyens (7) de détection de présence :
o les moyens (7) de détection de présence transmettent audit automate (11) de sécurité une information ponctuelle de hauteur de ladite palette (2), et
o ledit automate (11) de sécurité compare ladite information ponctuelle de hauteur à ladite information de référence,
- et **en ce que**, si ladite information ponctuelle ne correspond pas à l'information de référence, alors le robot est arrêté dans son fonctionnement et/ ou ladite enceinte est mise en sécurité.

2. Procédé selon la revendication 1, **caractérisé en ce que**, au moment de l'extraction de la palette, les moyens (7) de détection transmettent périodiquement ladite information ponctuelle, et **en ce que** ledit automate compare chaque information ponctuelle périodique reçue à ladite information de référence.

3. Procédé selon la revendication 1 ou 2, **caractérisé en ce que** ledit automate (11) de sécurité attribue une même information de référence à deux informations initiales de hauteur transmises par deux capteurs (70) voisins, appartenant à un même ensemble de capteurs (70).

4. Procédé selon l'une quelconque des revendications précédentes, **caractérisé en ce que**, avant un cycle de palettisation, on réalise un test du fonctionnement de ladite série de moyens (7) de détection.

5. Procédé selon la revendication 4, **caractérisé en ce que** ledit test consiste à :
- contrôler que les moyens (7) de détections ne sont pas occultés,
- occulter chacun desdits moyens (7) de détection, par un passage d'au moins une partie dudit robot (5) devant chacun d'entre eux pendant un laps de temps prédéterminé et constater un changement d'état de chacun desdits moyens (7) de détection au passage dudit robot (5).

6. Installation pour la mise en oeuvre du procédé selon l'une quelconque des revendications précédentes, ladite installation comprenant :
- une enceinte (1) fermée munie d'au moins une porte (4) offrant l'accès à au moins un poste (3) d'intervention opérateur, ledit au moins un poste (3) d'intervention opérateur étant situé dans ladite zone de travail d'un robot (5), et étant apte à accueillir une palette (2),
- une série de moyens (7) de détection de présence qui sont alignés sur un montant (6) de l'enceinte (1), ladite série de moyens (7) de détection :
(i) étant disposée au voisinage de ladite porte (4),
(ii) étant reliée à un automate (11) de sécurité agissant sur le fonctionnement du robot (5) et /ou sur la mise en sécurité de ladite enceinte (1), et communiquant avec un automate (12) de gestion de palettisation, et
(iii) comportant une série de capteurs (70) occultables positionnés à intervalles réguliers sur au moins une partie de la hauteur dudit poste (3) d'intervention opérateur, lesdits intervalles réguliers étant au plus de 400 mm.

7. Installation selon la revendication 6, **caractérisée en ce que** ladite série de capteurs (70) comporte huit capteurs (70), répartis en quatre ensembles de deux capteurs (70), lesdits ensembles étant espacés régulièrement les uns des autres sensiblement de 400 mm, les deux capteurs (70) d'un même ensemble étant espacés d'une distance comprise entre 50 mm et 200 mm.

## Patentansprüche

1. Verfahren zum Betreiben einer Robotoranlage, umfassend:
- einen geschlossenen Raum (1), der mit mindestens einer Tür (4) ausgestattet ist, die Zugang zu mindestens einer Station (3) zum Eingreifen einer Bedienperson verschafft, wobei die mindestens eine Station (3) zum Eingreifen einer Bedienperson in einem Arbeitsbereich eines Roboters (5) angeordnet ist und geeignet ist, eine Palette (2) aufzunehmen,
- eine Reihe von Anwesenheitserkennungsmitteln (7), die auf einer Höhe des geschlossenen Raums (1) ausgerichtet sind, wobei die Reihe von Anwesenheitserkennungsmitteln (7) in der Nähe der Tür (4) angeordnet ist, wobei die Reihe von Anwesenheitserkennungsmitteln (7) an eine Sicherheitssteuerung (11) angeschlossen ist, die auf den Betrieb des Roboters (5) und/oder auf die Absicherung des geschlossenen Raums (1) einwirkt, und mit einer Steuerung (12) zur Verwaltung der Roboteranlage verbunden ist, wobei die Steuerung (12) zur Verwaltung die Entnahme einer Palette (2) genehmigt und der Sicherheitssteuerung (11) eine Information in Bezug auf die Genehmigung zur Entnahme übermittelt,
wobei das Verfahren **dadurch gekennzeichnet ist, dass**:
- die Reihe von Anwesenheitserkennungsmitteln (7) der Sicherheitssteuerung (11) eine Anfangsinformation der Höhe (HCP) der Palette (2) übermittelt, auf der die Produkte (10) gelagert sind,
- die Sicherheitssteuerung (11) eine Referenzinformation erzeugt, die von der erhaltenen Anfangsinformation abhängt,
- mindestens dann, wenn die Palette (2) von der Station (3) zum Eingreifen einer Bedienperson entnommen wird und wenn sich ein Ende der Palette (2) vor der Reihe von Anwesenheitserkennungsmitteln (7) befindet:
o die Anwesenheitserkennungsmittel (7) der Sicherheitssteuerung (11) eine punktuelle Information der Höhe der Palette (2) übermitteln und
o die Sicherheitssteuerung (11) die punktuelle Information der Höhe mit der Referenzinformation vergleicht,
- und dass, wenn die punktuelle Information nicht der Referenzinformation entspricht, dann der Roboter in seinem Betrieb angehalten wird und/oder der geschlossene Raum abgesichert wird.

2. Verfahren nach Anspruch 1, **dadurch gekennzeichnet, dass** zum Zeitpunkt der Entnahme der Palette die Anwesenheitserkennungsmittel (7) in regelmäßigen Abständen die punktuelle Information übermitteln und dass die Steuerung jede regelmäßig erhaltene punktuelle Information mit der Referenzinformation vergleicht.

3. Verfahren nach Anspruch 1 oder 2, **dadurch gekennzeichnet, dass** die Sicherheitssteuerung (11) eine gleiche Referenzinformation zwei Anfangsinformation der Höhe, die von zwei benachbarten Sensoren (70) übermittelt werden, die zu einer gleichen Anordnung von Sensoren (70) gehören, zuordnet.

4. Verfahren nach einem der vorhergehenden Ansprüche, **dadurch gekennzeichnet, dass** vor einem Palettierzyklus ein Funktionstest der Reihe von Anwesenheitserkennungsmitteln (7) durchgeführt wird.

5. Verfahren nach Anspruch 4, **dadurch gekennzeichnet, dass** der Test darin besteht:
- zu kontrollieren, dass die Anwesenheitserkennungsmittel (7) nicht verdeckt sind,
- jedes der Anwesenheitserkennungsmittel (7) durch einen Durchgang von mindestens einem Teil des Roboters (5) vor jedem von ihnen während einer vorbestimmten Zeitspanne zu verdecken und eine Änderung des Zustands jedes der Anwesenheitserkennungsmittel (7) beim Durchgang des Roboters (5) festzustellen.

6. Anlage zum Umsetzen des Verfahrens nach einem der vorhergehenden Ansprüche, wobei die Anlage Folgendes aufweist:
- einen geschlossenen Raum (1), der mit mindestens einer Tür (4) ausgestattet ist, die Zugang zu mindestens einer Station (3) zum Eingreifen einer Bedienperson verschafft, wobei die mindestens eine Station (3) zum Eingreifen einer Bedienperson in dem Arbeitsbereich eines Roboters (5) angeordnet ist und geeignet ist, eine Palette (2) aufzunehmen,
- eine Reihe von Anwesenheitserkennungsmitteln (7), die auf einem Ständer (6) des geschlossenen Raums (1) ausgerichtet sind, wobei die Reihe von Anwesenheitserkennungsmitteln (7):
(i) in der Nähe der Tür (4) angeordnet ist,
(ii) an eine Sicherheitssteuerung (11) angeschlossen ist, die auf den Betrieb des Roboters (5) und/oder auf die Absicherung des geschlossenen Raums (1) einwirkt, und mit einer Steuerung (12) zur Verwaltung der Palettierung verbunden ist, und
(iii) eine Reihe von abdeckbaren Sensoren (70) aufweist, die in regelmäßigen Abständen auf mindestens einem Teil der Höhe der Station (3) zum Eingreifen einer Bedienperson angeordnet sind, wobei die regelmäßigen Abstände nicht mehr als 400 mm betragen.

7. Anlage nach Anspruch 6, **dadurch gekennzeichnet, dass** die Reihe von Sensoren (70) acht Sensoren (70) aufweist, die auf vier Anordnungen von zwei Sensoren (70) verteilt sind, wobei die Anordnungen gleichmäßig voneinander im Wesentlichen um 400 mm beabstandet sind, wobei die zwei Sensoren (70) von einer gleichen Anordnung um einen Abstand zwischen 50 mm und 200 mm beabstandet sind.

## Claims

1. Method making use of an automated system with robot, comprising:
an enclosure (1) equipped with at least one door (4) providing access to at least one operator intervention station (3), said at least one operator intervention station (3) being located within a work area of a robot (5) and being adapted to accommodate a pallet (2),
a series of presence detection means (7) in alignment along a height of the enclosure (1), said series of presence detection means (7) being arranged at or near said door (4), said series of presence detection means (7) being connected to a safety controller (11) acting on the operation of the robot (5) and/or on the safety measures applied to said enclosure (1), and communicating with a management controller (12) of the automated system,
said management controller (12) authorizing extraction of a pallet (2) and communicates information to the safety controller (11) concerning the extraction authorization,
said method being **characterized in that**:
said series of presence detection means (7) sends initial height information (HLP) about the pallet (2) on which products (10) are arranged to said safety controller (11),
said safety controller (11) generates reference information that is based on said initial information received,
at least at the moment when the pallet (2) is extracted from the operator intervention station (3) and when one end of the pallet (2) is located in front of the series of presence detection means (7):
the presence detection means (7) send current height information concerning said pallet (2) to said safety controller (11), and
said safety controller (11) compares said current height information to said reference information,
and **in that**, if said current height information does not match the reference information, then the robot is stopped and/or the safety measures of said enclosure are applied.

2. Method according to claim 1, **characterized in that**, at the time of pallet extraction, the presence detection means (7) periodically transmit said current height information, and **in that** said controller compares each received current height information to said reference information.

3. Method according to claim 1 or 2, **characterized in that** said safety controller (11) assigns the same reference information to two initial height information items sent by two neighboring sensors (70) belonging to a same set of sensors (70).

4. Method according to any of the preceding claims, wherein the operation of said series of detection means (7) is tested before a palletizing cycle.

5. Method according to claim 4, wherein said test operation comprises:
verifying that the detection means (7) are not obscured,
obscuring each of said detection means (7) one at a time by passing at least a part of said robot (5) in front of each one during a predetermined period of time and observing a state change for each of said detection means (7) when obscured by said robot (5).

6. Automated system for implementing the method according to any of the preceding claims, said automated system comprising:
an enclosure (1) equipped with at least one door (4) providing access to at least one operator intervention station (3), said at least one operator intervention station (3) being located within said work area of a robot (5) and being able to accommodate a pallet (2),
a series of presence detection means (7) in alignment along a vertical element (6) of the enclosure (1), said series of detection means (7):
(i) being arranged at or near said door (4),
(ii) being connected to a safety controller (11) acting on the operation of the robot (5) and/or on the safety measures applied to said enclosure (1), and communicating with a palletizing management controller (12), and
(iii) comprising a series of obscurable sensors (70) positioned at regular intervals along at least part of the height of said operator intervention station (3), said regular intervals being no larger than 400 mm.

7. Automated system according to claim 6, wherein said series of sensors (70) comprises eight sensors (70), divided into four sets of two sensors (70), said sets being spaced equally apart from each other by substantially 400 mm, the two sensors (70) of a same set being spaced apart by a distance of between 50 mm and 200 mm.
